(19) **Europäisches Patentamt / European Patent Office / Office européen des brevets**

(11) **EP 4 738 652 A1**

(12) **EUROPEAN PATENT APPLICATION**

(43) Date of publication:
06.05.2026 Bulletin 2026/19

(51) International Patent Classification (IPC):
*H02J 50/90* (2016.01)     *G06N 3/02* (2006.01)

(21) Application number: 24209561.0

(22) Date of filing: 29.10.2024

(52) Cooperative Patent Classification (CPC):
**H02J 50/90; G06N 3/02; G06N 3/045; G06N 3/08;**
H02J 50/80

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: Delta Electronics (Thailand) Public
Co., Ltd.
Samutprakarn 10280 (TH)

(72) Inventors:
• **ENDERLIN, Jonas**
  **79331 Teningen (DE)**
• **LOESER, Leon Andrea**
  **79111 Freiburg (DE)**

(74) Representative: **Hoefer & Partner Patentanwälte
mbB
Pilgersheimer Straße 20
81543 München (DE)**

(54) **WIRELESS POWER SYSTEM AND METHOD FOR TRAINING A MACHINE LEARNING MODEL**

(57) The invention concerns a wireless power system (1), comprising: a first unit (10, 20) including a pad (11, 21) and a wireless communication unit (12, 22), wherein the pad (11, 21) is configured to wirelessly transmit or receive power to or from a second unit (10, 20), and the wireless communication unit (12, 22) is configured to receive a communication signal from the second unit (10, 20); and a control unit (2), wherein the control unit (2) comprises: an input unit configured to receive the communication signal from the wireless communication unit; a detection unit configured to detect at least one signal strength value and/or at least one phase value of the communication signal; at least one trained machine learning model (200, 204 - 206) programmed to determine a relative position between the first unit (10, 20) and the second unit (10, 20) based at least on the detected signal strength value and/or phase value as input parameters (201); and an output unit (203) configured to output the relative position. The invention also concerns a power transmission system (100) and a method for training a machine learning model (200, 204 - 206).

## Fig. 1

## Description

## Field of the Invention

The invention concerns a wireless power system and a method for training a machine learning model for determining a relative position between a first unit and a second unit of a wireless power system.

## Background of the Invention

The use of computer-implemented methods in a wireless power system for determining a relative position between a first unit and a second unit of a wireless power system are known from for example US 2020/0353832 A1, US 2019/0381891 A1, and US 2023/0131879 A1. Furthermore, from US 2020/0339000 A1, a vehicle positioning system is known in which a ground assembly for the vehicle positioning system includes a first ground assembly at antenna, wherein the ground assembly is configured to function together with a vehicle assembly of the vehicle positioning system to determine a position of the vehicle assembly relative to the ground assembly, and wherein a determination of the position is performed by utilizing a neural network.

In some cases, for example in US 2020/0353832 A1, positioning is based on detecting an environment of the wireless power system, for example with cameras. In US 2020/0339000 A1, a neural network is trained using signals from magnetic antennas. The magnetic antennas are provided in addition to RF antennas which are used for communication between the units (assemblies) thereof.

However, the known solutions have multiple drawbacks. For one, systems based on environment detection for example with the use of cameras require costly components, and commonly achieve only a low accuracy. Furthermore, the use of magnetic antennas additional to a communication antenna increase the component costs, the size and weight of the devices, and increase the complexity of computing the corresponding signals.

## Summary

It is an object of the present invention to overcome these deficiencies. In particular, it is an object of the present invention to provide a wireless power system and a method for training a machine learning model for determining a relative position between a first unit and a second unit of a wireless power system, wherein positioning can be carried out using low-cost components, in a wide range of applications and environments as well as weather conditions, and with high accuracy.

The solution of these objects is achieved by the subject matter of the independent claims. The dependent claims contain advantageous embodiments of the present invention.

In particular, the solution of these objects is achieved by the wireless power system according to claim 1. The wireless power system comprises a first unit including a pad and a wireless communication unit, wherein the pad is configured to wirelessly transmit or receive power to or from a second unit. Therein, the wireless communication unit is configured to receive, or transmit and receive, a communication signal from the second unit. Furthermore, the wireless power system comprises a control unit. The control unit comprises an input unit configured to receive the communication signal from the wireless communication unit. The control unit comprises a detection unit configured to detect at least one signal strength value and/or at least one phase value of the communication signal. The control unit furthermore comprises at least one trained machine-learning model programmed to determine a relative position between the first unit and the second unit based at least on the detected signal strength value(s) and/or the detected phase value(s) as input parameters. The control unit also comprises an output unit configured to output the relative position.

Thereby, the wireless power system of the present invention utilizes the communication signal transmitted from a second unit to the first unit for determining the relative position between the two units. Since determining the relative position is not (solely) based on detecting the environment of the wireless power system and furthermore does not necessitate additional power transfer coils or magnetic antennas, the component costs are greatly reduced. Furthermore, determining the relative position based on the communication signal achieves greatly enhanced accuracy, especially over the use of power transfer coils or magnetic antennas for position detection. In some examples, the wireless power system additionally uses power transfer coils or magnetic antennas for relative position determination, i.e. in addition to using the communication signal.

In other words, the control unit is configured to determine the relative position or distance of the wireless communication unit, which is included in the first unit of the wireless power system, to an external second unit. For example, the first unit may be a reception unit (secondary side unit), and the control unit is configured to determine its alignment with the transmission unit (primary side unit). In some examples, the first unit is comprised by a vehicle, whereas the second unit is comprised by an external ground unit. Of course, the same holds true for examples in which the first unit is a ground unit and the second unit is an external vehicle-mounted unit.

In the sense herein, power transmission and/or reception will in some instances be abbreviated to "power transfer".

Preferably, the pad comprises one or more coils for power transmission and/or reception. In particular, these coils are separate from the antennas of the wireless communication unit.

In the sense herein, the term "relative position" refers to an at least one-dimensional, preferably two-dimensional, more preferably three-dimensional, distance from the first unit to the second unit. Preferably, the absolute position of one of the first unit and second unit is known. For example, one of the units is disposed in a predetermined location, for example in a parking lot or at a charging station. Thereby, an absolute position of the units can thereby be determined via the detected relative position and the known predetermined location. Furthermore, the term "relative position", in some preferable embodiments, also refers to an alignment angle (or spatial angle) between the first unit and the second unit.

Herein, the wireless power system uses the phase value and/or the signal strength of the communication signal to determine the relative position and control an alignment to the second unit. Thereby, no further power reception or transmission coils or magnetic materials apart from those used in the pad are necessary in the wireless power system, especially the first unit, in order to carry out alignment. Furthermore, the control unit is configured to determine the relative position by analyzing only the phase value(s) and/or the signal strength value(s) of the communication signal. In other words, for example, the communication signal itself does not carry the information used by the control unit to determine the relative position, i.e. this information is not encoded into the signal. Instead, the control unit determines the relative position based preferably solely on the physical characteristics of the communication signal, not the encoded information therein. In some embodiments, such encoded information may be used additionally to the phase value and/or the signal strength value based position detection of the present invention.

Preferably, the control unit is configured to receive the communication signal via the wireless communication unit and additionally or simultaneously use the communication signal for detecting the relative position. Thereby, preferably, no additional sensor for detecting received power by the magnetic field of the power transmission by the pad is necessary for detecting the relative position, since position detection can be based solely on the communication signal.

In one advantageous embodiment, the wireless communication unit is configured to receive, especially also provide, a near-field communication link as the communication signal. Further preferably, the communication signal is a pad-to-pad link (commonly also referred to as "PPL"). Therein, preferably, the communication signal communicates for example identification of the first unit and the second unit, power transmission requirements for controlling power transmission via the pad, or the like.

Preferably, in the near-field communication link, a 10 MHz to 15 MHz signal, preferably a 13.56 MHz signal, for example, is used as a carrier for the transmission of data.

Preferably, the pad for wireless power transfer and the wireless communication unit are contained in a common housing of the first unit. Thereby, preferably, a relative position of the wireless communication unit to the second unit essentially corresponds to a relative position of the pad, especially the wireless power system, to the second unit.

In general, a phase or signal strength value of the wireless communication signal can depend on the distance between the wireless communication unit, i.e. the first unit, and the second unit. Therefore, preferably in some embodiments by detecting the phase and/or signal strength of the received wireless communication signal as the phase-value and/or signal strength value, the trained machine-learning model, as will be elucidated below, can be trained to output a corresponding relative position. In particular, in some embodiments, an absolute phase and/or an absolute signal strength of the transmitted (for example by the second unit) communication signal is predetermined and known to the control unit. By comparing the received phase and/or the received signal strength with the transmitted phase and/or signal strength, the trained machine-learning model can in some examples determine the distance between the first unit and the second unit. For instance, the phase of the wireless communication signal and the distance are in a physical relationship, especially related to a refractive index of the medium (i.e. air and/or parts of the wireless power system, especially the pad). This physical relationship can be learned by the model of the control unit as the trained machine-learning model, especially correlating phase-differences and/or phase-changes in time and/or space, and corresponding distances. The control unit thus preferably refers to the trained machine-learning model to determine, based on the measured phase-value, the distance based on the relationship learned by the model.

In particular, the phase of the wireless communication signal can depend on the distance also due to different propagation paths through materials of the wireless power system and/or the second unit as well as the medium (predominantly air) separating the two (also referred to as "phase constant", i.e. the imaginary part of the propagation constant). As aforementioned, this relationship can be learned as a trained machine-learning model. Due to the high complexity and many variables involved in this physical relationship, a high accuracy is achieved by utilizing the trained machine-learning model.

In some preferable embodiments, the detection unit is configured to detect, as the phase value input parameter for the trained machine-learning model, a phase-difference between multiple receptions of the communication signal. Thereby, the accuracy of position detection is greatly enhanced.

Preferably, the phase-difference can be determined between multiple receptions in time and/or in space. In general, if the first unit is moving, multiple receptions in time will also be multiple receptions in space. Furthermore, if the first unit as will be detailed below includes multiple reception antennas, the multiple receptions in space can also be simultaneous, and can additionally also be at different times.

In some embodiments, the control unit is configured to calculate a time-phase-difference, as said phase-difference. Therein, the time-phase-difference is calculated between multiple receptions (i.e. multiple samples) at respectively different times, especially during relative movement between the wireless communication unit and the second unit. Preferably, a timestamp of the respective multiple receptions is recorded for each of the multiple receptions. Preferably therein, the multiple transmissions of the communication signal (corresponding to the multiple receptions) have a common phase propagation and reference, as the sent signal preferably has a continuous phase.

Preferably, the control unit is configured to calculate said time-phase-difference twice, respectively between two receptions at different times (i.e. for example at least three receptions, between first and second and between second and third receptions), and to calculate a time-dependent change between the time-phase-differences.

In some embodiments, the control unit is further configured to compare said time-dependent change with input and/or predetermined movement information, especially comprising amount (distance) and/or direction, of the wireless communication unit. In other words, the time-dependent change can be used by the control unit as feedback with respect to input and/or predetermined movement information, and alignment can thus be carried out with higher accuracy. For instance, the control unit is further configured to receive information or a signal based on the relative movement between the wireless communication unit and the second unit during a time frame between said multiple receptions. With this further information, the time-dependent change between time-phase-relations is correlated with the relative movement, such that distance and/or direction for optimal alignment are determinable by the control unit.

Illustratively, if traveled distance between the multiple receptions in time is known, this can be understood as being essentially similar to known locations of multiple antennas respectively at different locations simultaneously receiving the wireless communication signal (time and movement equal to distance).

Preferably, when calculating time-phase-relations, a time difference (difference in time stamps) of multiple receptions is below a predetermined threshold, especially so as to prevent symmetry properties of the time-phase-relation, particularly time-phase-difference, to cause an erroneous result. For example, a time difference corresponds preferably to at most $2\pi$, preferably at most $1\pi$, of the wireless communication signal.

In the sense of the foregoing and the following, when determining the relative position based on the signal strength value and/or the phase value, such as the foregoing described phase-difference, the detection unit of the control unit is preferably configured to detect and determine/calculate the foregoing described values, and input them into the trained machine learning model for determining the relative position. For instance, the detection unit is preferably configured to calculate the phase-difference and/or signal strength differences between multiple receptions as an input parameter of the trained machine learning model, i.e. the trained machine learning model has phase-differences and/or signal strength differences between multiple receptions as input parameters. Thereby, complexity and transparency of the machine learning model are increased.

In addition or alternatively thereto, the detection unit of the control unit is preferably only configured to detect the signal strength and/or the phase of the communication signal, and input these directly into the trained machine learning model, which is trained based on these values. In other words, the trained machine learning directly correlates the relative position with the detected signal strength and/or phase of the communication signal. Thereby, complexity and compute power of the detection unit are advantageously decreased.

Preferably, the detection unit is configured to detect, as the signal strength input parameter for the trained machine learning model, an amplitude of the received communication signal. In particular, the detection unit is preferably configured to detect, as the signal strength value, a maximum amplitude of each reception of the communication signal. In particular, the amplitude preferably does not refer to a temporal global maximum over multiple receptions. Detecting the signal strength value as an input parameter based on an amplitude of the received communication signal has the advantage in that position detection accuracy is high, while a range (i.e. maximum detectable distance between first unit and second unit) is also advantageously high. As a maximum amplitude, the detection unit is preferably configured to detect a maximum peak-to-peak value of the communication signal as an input parameter of the model.

Preferably, the detection unit is configured to detect the foregoing described phase value as well as the foregoing described signal strength value as input parameters for the trained machine learning model. Preferably, the phase value is used as a verification of the signal strength value, and vice versa. Thereby, the accuracy of the position detection can be increased. Furthermore, by introducing a redundancy, environmental effects such as weather conditions or variations in device configuration, especially vehicle configuration, on the detection accuracy can be reduced.

In preferable embodiments, the wireless communication unit comprises at least one main communication antenna for transmitting and receiving the communication signal. Furthermore, the wireless communication unit comprises at least one, especially two to four, auxiliary sensing antennas for detecting the relative position. Therein, the detection unit is configured to detect a signal strength difference as a signal strength value and/or a phase-difference as a phase value, respectively between multiple receptions of the communication signal via the at least one main communication antenna and the at least one auxiliary sensing antenna as input parameters. Therein, the auxiliary sensing antennas for detecting the relative position are also configured to receive the communication signal. In addition or alternatively to the detection unit detecting the signal strength difference and/or the phase-difference as above, the detection unit is configured to detect signal strength and/or phase of each of the multiple receptions via the multiple antennas and input these as input parameters directly into the trained machine learning model. In other words, preferably, the trained machine-learning model has antenna-specific signal strength and/or phase as input parameters and/or has signal strength difference and/or phase-difference between the antennas as input parameters.

Preferably, in some embodiments, the control unit comprises at least two trained machine learning models. Therein, a first trained machine learning model is programmed to determine the relative position based on the signal strength as an input parameter. Furthermore, a second trained machine learning model is programmed to determine the relative position based on the phase value as an input parameter. Thereby, two separate machine learning models are used for determining the relative position based respectively on the signal strength or the phase value as input parameters. This has the advantage in that computational efficiency and speed is greatly enhanced, which greatly enhances efficiency and speed of relative position detection and subsequent positioning. Furthermore, since the control unit herein comprises two separate trained machine learning models, their outputs can advantageously provide redundancy, as well as verification against each other, thereby increasing accuracy of relative position detection.

Preferably, the control unit comprises a further third trained machine learning model programmed to classify, based on the signal strength and the phase value as input parameters, the output relative position as output from the first or the second trained machine learning model. In other words, the third trained machine learning model is programmed to classify whether the relative position should be output from the first or the second trained machine learning model based on the signal strength and the phase value as input parameters. Thereby, computational efficiency and accuracy of position detection are further increased.

Preferably, the third trained machine learning model is programmed to estimate the relative position and is programmed to output from the first or the second trained machine learning model based on the estimated relative position. In other words, the third trained machine learning model estimates the relative position and selects whether the first or the second trained machine learning model outputs the relative position based thereon.

Preferably, the third trained machine learning model is programmed to output from the first trained machine learning model when the estimated relative position is above a predetermined distance threshold and is programmed to output from the second trained machine learning model when the estimated relative position is below the predetermined distance threshold. Thereby, the third trained machine learning model is programmed to choose the first trained machine learning model, which outputs the relative position based on the signal strength as an input parameter, at larger distances. When the relative position is below the predetermined distance threshold, i.e. the first unit and the second unit are closer together than the predetermined distance threshold, the third trained machine learning model is programmed to select the second trained machine learning model which determines the relative position based on the phase value as input parameters. Thereby, efficiency and accuracy of position detection is greatly enhanced. In particular, the relative position is determined by the second trained machine learning model at closer distances with higher accuracy, and is determined at larger distances based on the first trained machine learning model and the signal strength at higher ranges.

In some embodiments, the wireless communication unit is separated by a distance to the second unit. Therein, the control unit is configured to:

- At or below a first predetermined distance value, detect the relative position using the communication signal; and/or
- At or below a second predetermined distance value, transfer data using the communication signal.

Preferably, the first predetermined distance value is larger than the second predetermined distance value. Therein, the control unit is configured to transfer data using the communication signal only below the second predetermined distance value.

Preferably, at or below the second predetermined distance, the control unit is configured to decode the communication signal and thereby transfer data, especially via the near-field communication link and/or pad-to-pad link.

Preferably, above the second predetermined distance, the control unit receives the communication signal via the wireless communication unit, preferably without the transfer of data.

For example, at or below the second predetermined distance, a handshake can be carried out between the units so as to establish data transfer. Such a handshake is, for example, achieved via polling of the communication signal between the units. However, such polling does not transfer data.

Above the second predetermined distance, the communication signal is preferably only used for determining relative position. Additionally, above the second predetermined distance, the communication signal may also be used for polling (i.e. only used for determined relative position and polling), without the transfer of data.

For example, the communication signal may thereby be used for determining relative position at distances at which its signal strength is not adequate for data transfer, wherein however its phase value and or signal strength value may nonetheless be detected, for example via the polling.

Preferably, the control unit is configured to detect the relative position using the communication signal also at or below the second predetermined distance. In other words, at or below the second predetermined distance, the communication signal is used for data transfer as well as for determining of relative position.

For instance, at high distance ranges, the communication signal may be attenuated such that reliable data transfer is not possible or is prone to error. At such distances (first predetermined distance value), for example, the control unit is configured to detect the relative position using the communication signal, and at suitably lower distances (at or below the second predetermined distance value), the control unit is configured to transfer data. At or higher than the first predetermined distance value, the control unit is preferably configured to determine via the machine learning model the direction in which the second unit is located relative to the first unit. The control unit is preferably also configured to further carry out relative position determination at or below the second predetermined distance value, in addition to data transfer.

Further advantageously, the control unit is configured to control the pad to wirelessly transfer and/or receive power at or below a third predetermined distance value, wherein the third predetermined distance value is smaller than the second predetermined distance value. In particular, the third predetermined distance value is a distance value, within which the control unit determines that alignment has been achieved.

With respect to the multiple trained machine learning models, preferably, the third trained machine learning model estimates the relative position, and if roughly the first predetermined distance or higher is output, the third trained machine learning model selects the first trained machine learning model (signal strength based model), and if roughly lower than the first predetermined distance is output, the third trained machine learning model selects the second trained machine learning model (phase value based model), or outputs a combination of results the first and second trained machine learning models, for example for redundancy verification. For example, the first predetermined distance can be equal to the aforementioned predetermined distance threshold. In other examples, the second predetermined distance can be equal to the aforementioned predetermined distance threshold.

Preferably, the control unit comprises exactly one trained machine learning model. Therein, preferably, the one trained machine learning model is essentially a combination of, or encompasses, the foregoing described multiple trained machine learning models, for example by comprising all of their input parameters.

In preferable embodiments, the at least one trained machine learning model is pre-trained with predetermined relative positions, detected signal strengths, and detected phase values. As described above, the at least one trained machine learning model is preferably pre-trained with predetermined relative positions, detected signal strength differences and detected phase-differences, preferably in addition to detected signal strengths and detected phases.

Preferably, the predetermined relative positions are based on two- or three-dimensional Cartesian coordinates representing a distance between the first unit and the second unit. Preferably, the predetermined relative positions furthermore are based on an alignment angle between the first unit and the second unit.

Preferably, the at least one trained machine learning model is respectively a trained neural network, especially a trained feedforward neural network. Preferably, an input layer of the trained neural network receives the detected signal strength value and/or phase value, i.e. the input parameters, from the detection unit. Further preferably, the trained neural network comprises at least one hidden layer with neurons and activation functions, and an output layer which outputs the result to the output unit of the control unit.

Preferably, the control unit, preferably each of the least one neural networks, comprises a set of neuron-parameters. In other words, the neural network of the control unit is preferably pre-trained and held, with a set of neuron-parameters, in the control unit. When referring in the foregoing to input-parameters, these are preferably correlated with neuron-parameters according to the trained machine learning model. In particular, neuron-parameters preferably comprise weights and biases associated with each neuron of the neural network. In addition or alternatively to the neuron-parameters, the neural network is a generated code for neural network inference.

Preferably, the wireless power system further comprises at least one drive unit configured to move the first unit and/or the second unit. Therein, the control unit outputs the relative position to the drive unit and the drive unit is further configured to move the first unit and/or the second unit based on the relative position. Preferably, the control unit outputs the relative position as a distance and/or angle difference to roughly perfect alignment or to a threshold value for near-perfect alignment.

The present invention also concerns a power transmission system, comprising the wireless power system according to any one of the foregoing described examples as well as the second unit.

In other words, the power transmission system comprises the wireless power system with the first unit and the control unit and additionally comprises the second unit. Therein, for example, the first unit of the wireless power system is a secondary unit (reception side), and the pad of the first unit is a secondary pad configured to wirelessly receive power. The wireless communication unit therein is a secondary wireless communication unit. The second unit is a primary unit including a primary pad for wireless power transmission and a primary wireless communication unit (transmission side). In this regard, although exemplary described herein, it is to be understood that the first unit may also be on a primary side, and the second unit may thus be on a secondary side, with respect at least to power transfer, preferably also with respect to transmission (primary side) and reception (secondary side) of the communication signal, and vice versa.

In preferable embodiments, the secondary unit, i.e. the first unit of the wireless power system, comprises the control unit. This is especially preferable when the secondary unit is non-stationary, and is for example mounted in a vehicle.

Preferably, the primary wireless communication unit, i.e. the wireless communication unit of the second unit, comprises at least one primary main communication antenna for transmitting and receiving the communication signal. Preferably, the configuration of the primary main communication antenna is the same as of the main communication antenna of the first unit.

Therein, the primary wireless communication unit comprises at least one, especially two to four, primary auxiliary sensing antennas for detecting the relative position. The primary auxiliary sensing antennas preferably have the same configuration as those of the first unit, i.e. the aforementioned auxiliary sensing antennas. This has the advantage in that both the primary and secondary side can be configured substantially equally, which is advantageous in terms of signal and power transfer as well as ease of manufacturing. Furthermore, in the preferable case that both the first unit and the second unit (i.e. primary and secondary side units) are configured for detecting the relative position, the units can provide a more accurate detection and/or can verify the detected relative position of the respective other unit.

In some preferable examples, the secondary unit is comprised by an electric vehicle, especially an industrial electric vehicle, an airport vehicle, and/or an autonomous vehicle. The primary unit is especially wall-mounted or floor-mounted.

The present invention also concerns a vehicle, especially an electric vehicle, comprising the wireless power system according to any one of the foregoing described examples or comprised by the power transmission system according to any one of the foregoing described examples.

Preferably, the electric vehicle is an automated guided vehicle (commonly abbreviated as "AGV") comprising the wireless power system according to any one of the foregoing described examples. Therein, the AGV preferably comprises a control unit configured to automatically (i.e. at least largely without user input) guide the AGV to align the primary unit and the secondary unit so as to improve charging efficiency. Preferably, the AGV comprises the secondary unit, i.e. is configured primarily for power reception.

Preferably, the control unit of the AGV is the control unit of the wireless power system. Therein, the control unit of the AGV is configured to receive, via the wireless communication unit, the communication signal and detect the at least one phase value and/or the at least one signal strength value of the communication signal transmitted by the primary unit, and to determine the relative position of the AGV and the primary unit (i.e. the second unit) via the trained machine learning model.

Advantageously, the control unit of the AGV is further configured to control the AGV, especially a drive unit of the AGV (i.e. motor, wheels etc.), to move the AGV according to the determined relative position so as to reduce, especially minimize, the distance to the second unit.

Further preferably, the control unit of the AGV is configured to enable wireless power transfer, especially wireless charging of batteries of the AGV, once the vehicle is deemed to be aligned with the second unit, especially once the distance based on relative position is smaller than a predetermined threshold (for example, smaller than the aforementioned third predetermined distance).

In particular, the control unit of the AGV is configured to determine the relative position of the AGV once, and move the AGV according to the above. This has the advantage of lower compute power being necessary for the control unit of the AGV. In an alternative embodiment, the control unit of the AGV is configured to continuously, for example every few, i.e. 2 or 5 or 10 seconds, detect the relative position and move the AGV accordingly. This increases the accuracy of alignment, and especially provides redundant measurements which can be used to verify the determination.

The foregoing described explanations of the AGV are combinable with the foregoing described explanations of the wireless power system.

Thereby, the present invention achieves an electric vehicle, in particular an AGV, which can be advantageously guided or advantageously guide itself to a primary unit with high accuracy and in an efficient manner, thereby achieving more efficient charging, faster charge speeds, and higher comfort for the passenger.

Preferably, the power transmission system according to some embodiments comprises the wireless power system as well as the foregoing described AGV. Therein, preferably, the control unit of the wireless power system is comprised by the AGV. In addition or alternatively thereto, the control unit of the wireless power system in the power transmission system is external to the AGV and communicates with the AGV's control unit, preferably via the communication signal, such that the AGV's control unit can suitably guide the AGV to the secondary unit.

The present invention also concerns a method for alignment of an AGV with a primary unit (second unit) according to the foregoing explained method of the AGV's control unit.

With the foregoing embodiments, the present invention provides a wireless power system capable of accurately detecting its position relative to a second unit. The present invention also provides a power transmission system in which the first unit can accurately detect its position relative to the second unit of the power transmission system.

Furthermore, the present invention also concerns a method for training a machine learning model, especially for training the machine learning model of the foregoing described examples, for determining a relative position between a first unit of a wireless power system and a second unit. Preferably, the method is for training the machine learning model of the foregoing described power transmission system. Therein, the first unit and the second unit comprise a first wireless communication unit and a second wireless communication unit, respectively. The method comprises the following: placing the first unit and/or the second unit on a positioning jig. A first iteration of: recording a first relative position of the first unit and/or the second unit, transmitting a communication signal between the first unit and the second unit, and detecting at least one first phase value and/or at least one first signal strength value of the communication signal received by the first unit or the second unit at the first relative position. Furthermore, the method comprises at least a second iteration of: changing, via the positioning jig, the relative position to a second relative position and repeating said recording, transmission, and detecting steps. Furthermore, the method comprises inputting of the recorded relative positions and the detected phase values and/or the detected signal strength values as one or more set(s) of training data points for input parameters of the machine learning model. Thereby, the machine learning model is trained and programmed to accurately and efficiently determine a relative position between the first unit and the second unit of the wireless power system.

Preferably, the inputting step is carried out after each iteration. For example, the first relative position is recorded, the communication signal is transmitted, and the first phase value and/or the first signal strength value of the communication signal is detected. Then, these values are input as input parameters of the machine learning model. Thereafter, the second iteration of changing the relative position and recording, transmitting, and detecting are carried out and further input into the machine learning model.

Preferably, in some embodiments, multiple iterations of recording, transmitting, and detecting are carried out and then afterwards the recorded and detected values of multiple iterations are input (simultaneously and/or within one training process) into the machine learning model. In other words, the input values of multiple iterations are input into the machine learning model simultaneously, or are input into the machine learning model after each iteration.

Preferably, the method comprises sanitizing the recorded and/or detected values before inputting them into the machine learning model for training. For instance, sanitizing is performed preferably by peak filtering and/or averaging and/or smoothing of the values.

Preferably, the relative position change is in one spatial dimension per iteration and is in a range of roughly 5 mm to 10 mm inclusive. In other words, an accuracy of relative position determination of the machine learning model is in the range of roughly 5 mm to 10 mm inclusive.

Further preferably, the relative position change, per dimension, is from roughly -10 cm to +10 cm inclusive over all iterations. In other words, the total detection range of relative position determination of the machine learning model is in the range of -10 cm to +10 cm from perfect alignment, i.e. centered first and second units.

Preferably, the trained machine learning model of the wireless power system and/or of the power transmission system of any of the foregoing described examples is trained by the foregoing described method for training.

Preferably, the method for training a machine learning model trains a neural network, especially foregoing described feedforward neural network and corresponding neuron-parameters.

Preferably, the control unit comprises at least one microcontroller ("MPU"), CPU, GPU, SoC, an ASIC, FPGA, or the like. Furthermore, the control unit preferably comprises one or more storage media. Therein, preferably, the input unit and/or the detection unit and/ the output unit are, in addition the trained machine leaning model, preferably units of software stored on storage media and carried out by the control unit. Alternatively or in addition thereto, the input unit and/or the detection unit and/or the output unit are connected to or comprise physical components. For example, input unit and the output unit respectively comprises one or more terminals for reception of the communication signal and output of the result. The detection unit preferably comprises a multiplexer, an anti-aliasing filter, and/or an analog-to-digital converter. The input unit is preferably connected to the wireless communication unit, especially the antenna thereof, via a physical (i.e. wired) or a wireless connection.

The foregoing described preferable embodiments and configurations may be combined.

Further details, advantages, and features of the preferred embodiments of the present invention are described in detail with reference to the figures. Therein:

**Brief Description of the Drawings**

Fig. 1 shows a top view of a power transmission system according to a first embodiment of the present invention in a vertical mounting orientation;

Fig. 2 shows a side view of a wireless power system of the power transmission system in the vertical mounting orientation of Fig. 1;

Fig. 3 shows a schematic diagram of a trained machine-learning model of a control unit of the wireless power system according to the first embodiment of the present invention;

Fig. 4 shows a flow chart of a method for training the machine-learning model according to the first embodiment of the present invention;

Fig. 5 shows a schematic diagram of a trained machine learning model of a control unit of the wireless power system according to a second embodiment of the present invention; and

Fig. 6 shows a schematic drawing of an electric vehicle according to the present invention.

**Description of the Embodiments**

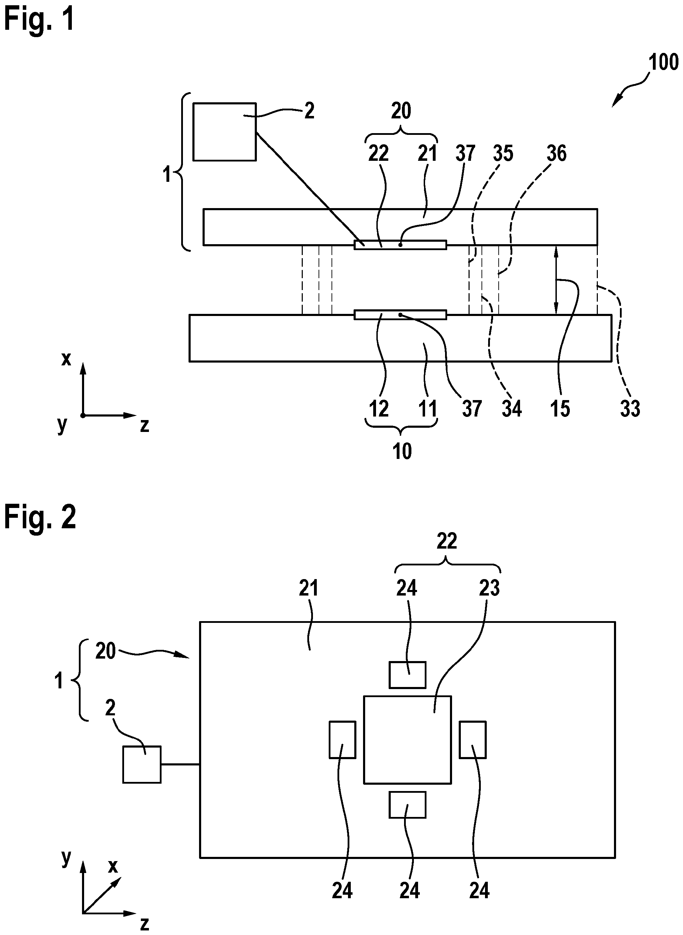

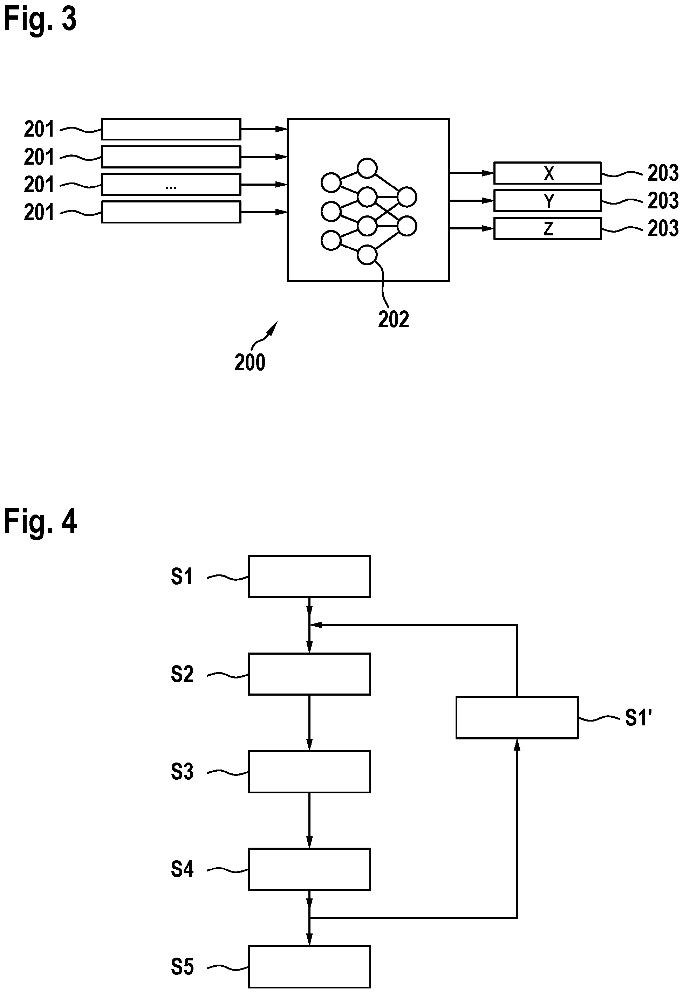

A first embodiment of the present invention will be described with reference to Figs. 1 to 4. Fig. 1 shows a top view of a power transmission system 100 according to a first embodiment of the present invention in a vertical mounting direction. Fig. 2 shows a detail side view of a wireless power system 1 of the power transmission system 100 according to the first embodiment of the present invention shown in vertical mounting orientation in Fig. 1. Fig. 3 shows a schematic diagram of a trained machine-learning model of a control unit 2 of the wireless power system according to the first embodiment of the present invention. Fig. 4 shows a flow chart of a method for training the machine-learning model of Fig. 3.

As can be taken from Fig. 1, the power transmission system 100 of the present embodiment comprises a wireless power system 1 and a second unit 10 external to the wireless power system 1.

In particular, Fig. 1 shows the power transmission system 100 comprising the first unit 20 as a secondary side (reception side) and the second unit 10 as a primary side (transmission side) with respect to wireless power transfer (transmission & reception).

However, as shown in Fig. 2, the invention is not strictly limited thereto, and is understood as being implementable as a wireless power system 1 comprising preferably only one of the sides, i.e. primary or secondary. In the power transmission system 100 of Fig. 1, the wireless power system 1 is implemented as a secondary side (reception side) and the first unit 20 thereof will be denoted in the following as a "secondary unit 20", and the second unit 10 of the power transmission system 100 is implemented as a primary side (transmission side), and will be denoted in the following as "primary unit 10", as an example.

With regard to the power transmission system 100 of Fig. 1, the wireless power system 1 thereof comprises the secondary unit 20, which includes a pad 21 (henceforth "secondary pad 21") configured to wirelessly transfer power. The primary unit 10 also comprises a pad 11 (henceforth "primary pad 11"), configured to wirelessly transfer power to/from the secondary pad 21. Each of the primary pad 11 and the secondary pad 21 comprises coils (not shown), which inductively and/or capacitive couple with one another to wirelessly transfer electromagnetic energy.

Herein, for example, the wireless power transmission system 1 is configured to perform high-powered wireless charging in a range of 50 kHz to 80 kHz with a wattage of 1 kW to 75 kW.

As can be taken from the top view of Fig. 1, the primary unit 10 is preferably wall mounted. In an alternative embodiment, the primary unit 10 may be floor mounted.

The primary unit 10 further comprises a primary wireless communication unit 12. The secondary unit 20 further comprises a secondary wireless communication unit 22. The primary and secondary wireless communication units 12, 22 are shown schematically in Fig. 1. The secondary wireless communication unit 22 will be explained in more detail below with reference to Fig. 2.

Herein, the primary and secondary wireless communication units 12, 22 are configured to exchange information via near-field communication. In other words, the primary and secondary wireless communication units 12, 22 are configured to provide a near-field communication link as a communication signal. This is especially referred to as a "pad-to-pad link" (also known as "PPL"). In the present embodiment, the communication signal is encoded via on-off-shift keying modulation. However, the invention is not limited to such modulation, and alternative known modulation types may be implemented herein.

In the present embodiment, the communication signal includes (i.e. is encoded with) information regarding, for example, device identification, power transfer requirements for controlling power transmission via the pads, setpoints for power control, or the like. For example, a high number of wireless power systems 1 can be provided, for example in an industrial building, which are alternately supplied with power by the primary unit 10, and which therefore include identification information and/or respective power supply requirement information.

Furthermore, the wireless power system 1 comprises a control unit 2. In the present embodiment, the control unit 2 is connected to the secondary wireless communication unit 22. In addition, the control unit 2 is preferably connected to the primary wireless communication unit 12 and/or the primary pad 11 and/or the secondary pad 21, preferably to allow or initiate power transfer in addition to position determination. In particular, the control unit 2 is preferably connected wirelessly to any one or more of the foregoing described units, in addition or alternatively to the shown physical connection, i.e. via a wired connection.

Preferably, although not shown, the power transmission system 100 comprises a plurality of control units, wherein preferably each of the primary unit 10 and the secondary unit 20 comprises a (primary or secondary) control unit, which are respectively connected especially wirelessly to the control unit 2. In other words, the control unit 2 of the present embodiment is preferably a central control unit 2 for controlling the primary unit 10 and the secondary unit 20. Preferably, the control unit 2 may be comprised by the primary unit 10 or the secondary unit 20 and may be connected especially wirelessly to other (primary or secondary or central) control unit(s).

The control unit 2 of the wireless power system 1 is configured to detect a relative position of the wireless power system 1 to the external primary unit 10. Thereby, the wireless power system 1 can be brought into close alignment with the primary unit 10 (i.e. the second unit 10).

Herein, the control unit 2 is configured to detect a distance, especially a three-dimensional distance, between the primary unit 10 and the secondary unit 20. This distance is then preferably further used to bring the primary unit 10 and the secondary unit 20 into optimal alignment for power transmission, for example via a drive unit connected to the primary unit 10 and/or the secondary unit 20.

First, the general alignment from position detection will be explained, and the detection of the relative position will be explained later.

As can be taken from Fig. 1, multiple predetermined distances 33, 34, 35, 36 may be defined from center points 37 of the primary wireless communication unit 12 and the secondary wireless communication unit 22.

Therein, depending on the distance between the center points 37, the control unit 2 is configured to carry out different modes of operation:

At or below the first predetermined distance 33, the control unit 2 is configured to detect the relative position of the communication units 12, 22. Therein, the control unit 2 is especially configured to only detect the relative position, without transfer of data between the communication units 12, 22 via the communication signal.

At or below a second predetermined distance 34, the control unit 2 is configured to transfer data using the communication signal, especially via a handshake establishing the near-field communication link or pad-to-pad link between the communication units 12, 22. Above this second distance 34, the communication link may not be adequately stable for data transfer, such that it is preferably only used for determining relative position. In addition to being used for determining relative position, the communication signal may be used at least at or above the second distance 34 for polling between the primary unit 10 and the secondary unit 20, for example for establishing the handshake. In other words, above the second distance 34, the communication signal is preferably not used for data transfer, and is preferably only used for determining relative position and polling.

Further, at or below this second distance 34, the control unit 2 is further configured to use the communication signal for determining the relative position of the primary unit 10 and the secondary unit 20 in addition to data transfer.

At or below a third predetermined distance 35, which is below the second predetermined distance 34, the control unit 2 is configured to control the primary pad 11 and/or the secondary pad 12 for wirelessly transferring power, especially in coordination with the data transferred by the communication signal. Furthermore, in this region, the control unit 2 may further detect the relative position for further optimized positioning of the primary unit 10 and the secondary unit 20.

Further yet, at or below a fourth predetermined distance 36, the control unit 2 is configured to determine more accurately the relative position of the primary unit 10 and the secondary unit 20, as for example fine alignment. For instance, as will be detailed further below, at or below the first predetermined distance 33, the control unit 2 is configured to determine the distance based on a signal strength value of the communication signal for rough alignment. Further, at or below the fourth predetermined distance 36, the control unit 2 is configured to determine the distance based on a phase value of the communication signal for fine alignment.

Although Fig. 1 shows the predetermined distances 33 - 36 being along the z-axis, these distances 33 - 36 are not necessarily limited thereto. Instead, these may be understood as three-dimensional distances (distance regions), or in case for example heights (i.e. y-direction in Fig. 1) of the primary unit 10 and the secondary unit 20 are fixed, may be understood as two-dimensional distances (distance regions), especially in a plane defined by x-, and z-axes. Of course, this teaching can be easily transferred to the possible case of the primary unit 10 being floor mounted.

The detection of the relative position will now be explained in further detail especially in view of Figs. 2 to 4. Fig. 2 shows in detail a configuration of the wireless power system 1 shown in Fig. 1. The following explanations with respect thereto can additionally or alternatively apply to the primary unit 10 and vice versa.

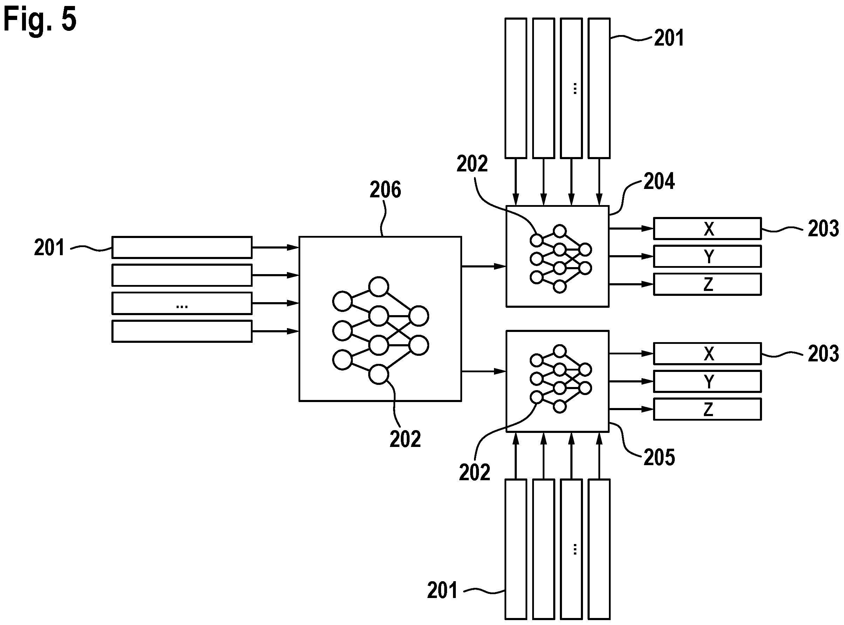

As shown in Fig. 2, the secondary wireless communication unit 22 comprises a main communication antenna 23 and four auxiliary sensing antennas 24. Herein, the main communication antenna 23 of the secondary wireless communication unit 22 communicates with a main communication antenna (not shown in Fig. 2, see Figs. 5 to 7) 13 of the primary wireless communication unit 12, especially for data transfer. The control unit 2 is configured to decode the communication signal received by the main communication antenna 23 of the secondary unit 20. This data transfer is especially carried out at or below the aforementioned second predetermined distance 34.

Preferably, the main communication antenna 23 and the auxiliary sensing antennas 24 are flat printed circuit board antennas.

The main communication antenna 23 and the four auxiliary sensing antennas 24 of the secondary wireless communication unit 22 are configured to receive the communication signal sent by the main communication antenna 13 of the primary wireless communication unit 12.

The control unit 2 is configured to detect the relative position of the primary wireless communication unit 12 and the secondary wireless communication unit 22 using the communication signal received by the auxiliary sensing antennas 24 of the secondary wireless communication unit 22. In particular, the control unit 2 is preferably not configured to decode the communication signal received by the auxiliary sensing antennas 24. Instead, the control unit 2 uses the signal received by the auxiliary sensing antennas 24 only to detect the relative position.

This detection of the relative position is especially carried out at or below the aforementioned first predetermined distance 33.

Herein, the auxiliary sensing antennas 24 are arranged so as to symmetrically surround the main communication antenna 23 of the secondary wireless communication unit 22. The auxiliary sensing antennas 24 are not connected directly to the main communication antenna 23 (see also Figs. 5 to 7). It is, however, not generally necessary to arrange the auxiliary sensing antennas 24 symmetrically around the main communication antennas 23.

Each of the auxiliary sensing antennas 24 of the secondary unit 20 receives the communication signal from the main communication antenna 13 of the primary unit 10. Since the auxiliary sensing antennas 24 are provided at different positions, the propagation path length of the communication signal received by each of these will differ such that phase values thereof will differ.

Now, with reference to Fig. 3, the relative position determination of the control unit 2 will be described.

The control unit 2 comprises an input unit configured to receive the communication signal from the secondary wireless communication unit 22. In other words, as shown in Figs. 1 and 2, the control unit 2 is directly connected to the secondary wireless communication unit 22, preferably via a wired connection, whereas a wireless connection is also possible. The control unit 2 further comprises a detection unit (not shown) configured to detect a signal strength and/or a phase value of the communication signal.

The control unit 2 comprises a trained machine learning model 200 which is programmed to determine the relative position (output 203) between the first unit (i.e. the secondary unit) 20 and the second unit (i.e. the primary unit) 10 based at least on the detected signal strength and/or phase value as input parameters 201. The control unit 2 further comprises an output unit outputting the relative position determined by the machine learning model 200.

The trained machine learning model in the present embodiment is a trained neural network 200, comprising neuron-parameters 202.

Generally speaking, every signal has a phase $\varphi n$ (n = 1...4) with a phase-offset $\Delta cp$ shared between all receptions. Herein the phases $\varphi n$ have the following functional dependencies:

$$\varphi_1 (x_p - x_s, y_p\text{-}y_s, z_p\text{-}z_s, \Delta\varphi);$$

$$\varphi_2 (x_p - x_s, y_p\text{-}y_s, z_p\text{-}z_s, \Delta\varphi);$$

$$\varphi_3 (x_p - x_s, y_p\text{-}y_s, z_p\text{-}z_s, \Delta\varphi);$$

and

$$\varphi_4 (x_p - x_s, y_p\text{-}y_s, z_p\text{-}z_s, \Delta\varphi)$$

Therein, x, y, and z refer to Cartesian space coordinates, whereas the subscripts "s" and "p" refer to the secondary unit 20 and the primary unit 10, respectively. For example, "$x_p - x_s$" denotes the distance, in x-direction, between the primary unit and the secondary unit.

Furthermore, a similar relationship holds true for the amplitudes of the communication signal, with the auxiliary sensing antennas 24 receive amplitudes $A_1$, $A_2$, $A_3$ and $A_4$:

$$A_1(x_P - x_S, y_P - y_S, z_P - z_S);$$

$$A_2(x_P - x_S, y_P - y_S, z_P - z_S);$$

$$A_3(x_P - x_S, y_P - y_S, z_P - z_S);$$

and

$$A_4(x_P - x_S, y_P - y_S, z_P - z_S)$$

Therein, x, y, and z refer to Cartesian space coordinates, whereas the subscripts "s" and "p" refer to the secondary unit 20 and the primary unit 10 as above, respectively. For example, "$x_p - x_s$" denotes the distance, in x-direction, between the primary unit 10 and the secondary unit 20.

However, generally, the signal strengths, i.e. amplitudes, and phases do not linearly depend on the distance between the units 10, 20, and it is challenging to determine a function (or curve-fit) which accurately portrays these physical relationships. Therefore, in the present embodiment, the neural network 200 is trained to output the relative distance 203 based on the signal strength and/or the phase value as input parameters 201.

Herein, each of the antennas 23, 24 output the received communication signal to the detection unit, which detects the phase value and/or the signal strength of each reception of the communication signal. Each of these values is then input, as an input parameter 201, into the neural network 200, i.e. the neuron-parameters 202.

Preferably, the detection unit is configured to calculate a phase-difference between a first reception and a second reception of the communication signal, the second reception being at a later time than the first reception, or the second reception being from a different antenna 23, 24 than the first reception. This phase-difference can then be input, either in addition or alternatively to, the (absolute) phase as an input parameter 201. Herein, instead of calculating the phase-difference via the detection unit, essentially this calculation is carried out by the neural network 200. In other words, the neural network 200 can receive the phase-difference or the absolute phase values, and output a determined relative position 203 based thereon. The same reasoning is preferably applied to the detection of signal strengths and signal strength differences (i.e. amplitudes and amplitude differences).

As can be taken from Fig. 3, the control unit 2, specifically the neural network 200, outputs the relative position X,Y,Z as an output result 203.

Now, with respect to Fig. 4, a method for training the neural network 200 will be described.

The training method comprises:

SI: placing the first unit 20 and/or the second unit 10 on a positioning jig;

a first iteration of:

S2: recording a first relative position of the first unit 20 and/or the second unit 10;

S3: transmitting a communication signal between the first unit 20 and the second unit 10;

S4: detecting at least one first phase value and/or at least one first signal strength value of the communication signal received by the first unit 20 or the second unit 10 at the first relative position;

and at least a second iteration of:

S1': changing, via the positioning jig, the relative position to a second relative position and repeating said recording S2, transmission S3, and detecting S4 steps, and

S5: inputting of the recorded relative position(s) and the detected phase value(s) and/or the detected signal strength value(s) as a set of training data points for input parameters 201 of the machine learning model 200.

Steps S1/S1' - S4 can be repeated numerous times, especially until the total range for training the model is reached. In some examples, the jig is moved in total - 10 cm to + 10 cm inclusive over all iterations, with respect to a zero of perfect alignment.

Then, in step S5, the results are input into the machine learning model 200 which is trained accordingly for attaining a new set of neuron-parameters 202.

Alternatively, step S5 may be carried out after each iteration, i.e. after each process comprising steps S1/S1' - S4.

Preferably, the relative position chance, per spatial dimension (X, Y, Z) and per iteration (i.e. S1') is roughly 5 mm to 10 mm inclusive, which corresponds to an accuracy of the trained machine learning model.

The resulting neural network 200 with neuron-parameters 202 is then input into the control unit 2 and carried out thereby during relative position detection. In particular, the neural network 200 is stored on a memory unit of the control unit 2 or on a memory unit connected to the control unit 2.

It should be noted that the input parameters 201 of the neural network 200 are not generally limited to the foregoing described phase values and signal strength values. Further input parameters 201 are for example ambient temperature, humidity, elevation, air pressure, device parameters such as magnetic material amount, material density, as well as current power transmission (received and/or output voltage, current, frequency). Training using these input parameters 201 can be carried out by detecting or recording these values in step S2, and inputting them into the neural network 200 in step S5.

Furthermore, as can be taken from Fig. 5, multiple neural networks 200, i.e. multiple sets of neuron-parameters 202, may be provided.

Herein, the control unit 2 comprises in total three neural networks 200, in particular a first neural network 204, a second neural network 205, and a third neural network 206.

Herein, the first neural network 204 is programmed to determine the relative position based on the signal strength as an input parameter 201, and the second neural network 205 is programmed to determine the relative position based on the phase value as an input parameter 201. In particular, the first neural network 204 is not programmed for position determination based on the phase value, and vice versa with respect to the second neural network 205.

Furthermore, the control unit comprises the third neural network 206 which is programmed to classify, based on the signal strength and the phase value as input parameters 201, the output relative position as output 203 from the first neural network 204 or the second neural network 205. In other words, the third neural network 206 classifies the input parameters 201, and selects whether to output from the first or second neural network 204, 205.

Therein the third neural network 206 is programmed to estimate the relative position and output from the first or the second neural network 204, 205 based on the estimated relative position. In particular, the third neural network 206 is programmed to output from the first neural network 204 when the estimated relative position is above a predetermined distance threshold and to output from the second neural network 205 when the estimated relative position is below the predetermined distance threshold, especially due to the higher range accuracy of amplitude measurements, and higher accuracy for small distances of phase measurements.

In Fig. 5, it is shown that all neural networks 204 - 206 can receive respectively all input parameters 201, wherein the third neural network 206 selects the first or the second neural network 204, 205 as output 203.

On the other hand, alternatively thereto, the input parameters 201 are only input into the third neural network 206. Therein, the third neural network 206 essentially forwards the corresponding input parameters 201 (i.e. phase value or signal strength value) to the corresponding selected first or second neural network 204, 205.

Furthermore, the output 203 of the first or second neural network 204, 205 can be input as an input parameter 201 into any of the other neural networks 204 - 206, for instance as a verification (for example, plausibility check) or training data.

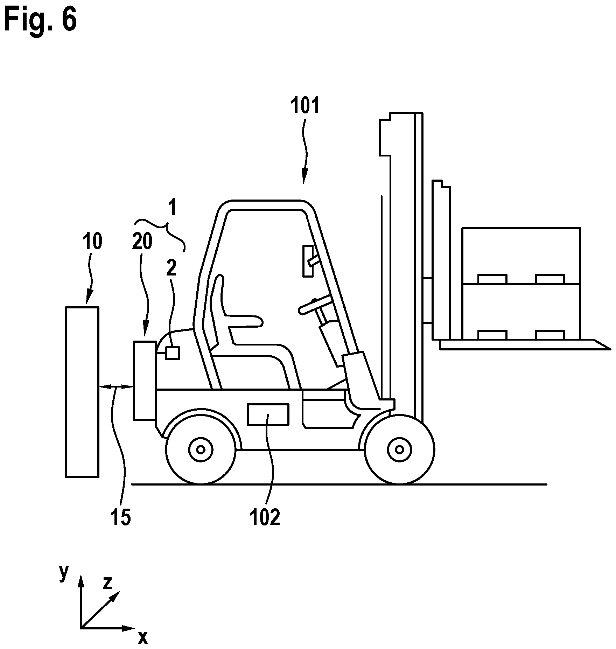

Fig. 6 shows a schematic drawing of an electric vehicle 101 of the present invention. In the present embodiment, the electric vehicle 101 is comprised by the power transmission system 100 according to the first embodiment or the second embodiment of the present invention.

In the present implementation example, the electric vehicle 101 comprises the wireless power system 1, in particular the first unit (secondary unit 20) and the control unit 2 of the wireless power system 1 according to the foregoing described embodiments.

For example, the electric vehicle 101 is an autonomous guided vehicle (AGV), in particular an autonomous forklift. Alternatively, the electric vehicle 101 may preferably be an autonomous robot or the like, especially in implementations of the wireless power system 1 in storage facilities, wherein the electric vehicle (autonomously or human-driven) retrieves and/or places stored items in the facility. Alternatively, the electric vehicle 101 may be an electric automobile or the like.

Herein, the second unit (i.e. the primary unit 10) of the power transmission system 100 is especially wall-mounted. The electric vehicle 101 comprises the control unit 2 and the secondary unit 20 of the wireless power system. Further, the electric vehicle 100 comprises a battery unit 102, wherein the battery unit 102 is charged via wireless power transmission from the primary unit 10.

Alternatively, the primary unit 10 may be floor mounted. Therein, the orientation or mounting position of the secondary unit 20 may correspondingly vary in accordance with the mounting position of the primary unit 10. For example, if the primary unit 10 is floor mounted, then the secondary unit 20 may be mounted at or under a floor of the electric vehicle 101.

With the foregoing described wireless power system 1 and the wireless power transmission system 100, the relative position of the primary unit 10 mounted on the wall and the secondary unit 20 mounted on the electric vehicle 101 can be detected. Further, using the detected result, especially via the control unit 2, the electric vehicle 101 can be efficiently and easily controlled so as to bring the secondary unit 20 into close alignment in three-dimensional space with the primary unit 10 for efficient wireless power transmission.

Preferably, the foregoing described drive unit corresponds to the electric vehicle 101 in this embodiment.

In particular, the control unit 2 is configured to, as described above, determine the relative position of the electric vehicle 101 from the at least one phase value and/or the at least one signal strength value of the communication signal 32 transmitted by the primary unit 10, and to determine the relative position of the vehicle 101 and the primary unit 10 via the trained machine learning model 206.

Advantageously, the control unit 2 of the vehicle 101 is further configured to control the vehicle 101, especially a drive unit of the vehicle 101 (i.e. motor, wheels etc.), to move the vehicle 101 according to the determined relative position so as to reduce, especially minimize, the distance to the primary unit 10, i.e. to reduce the air gap 15.

Further preferably, the control unit 2 of the vehicle 101 is configured to enable wireless power transfer, especially wireless charging of the battery unit 102, once the vehicle 101 is deemed to be aligned with the primary unit 10, especially once the air gap 15 based on the determined relative position is smaller than a predetermined threshold (for example, smaller than the aforementioned third predetermined distance 35).

In particular, the control unit 2 of the vehicle 101 is configured to determine the relative position of the vehicle 101 once, and move the vehicle 101 according to the above. This has the advantage of lower compute power being necessary for the control unit 2 of the vehicle 101. In an advantageous modification to the present embodiment, the control unit 2 of the vehicle 101 is configured to continuously, for example every few, i.e. 2 or 5 or 10 seconds, detect the relative position and move the vehicle 101 accordingly. This increases the accuracy of alignment, and especially provides redundant measurements which can be used to verify the determination.

In a further possible implementation, the electric vehicle 101 may also be an elevator. Therein, the primary unit 10 is preferably mounted at a bottom of an elevator shaft, wherein the secondary unit 20 is preferably mounted at or below a floor of the elevator. In other implementation examples, the primary unit 10 is preferably mounted at a wall of the elevator and the secondary unit 20 is preferably mounted at a wall of the elevator shaft, for example on the first (or ground) floor, at which the elevator generally spends the most time. Thereby, advantageously, wear of a cable connecting electronics of the elevator can be prevented by replacing such a cable with the wireless power system 1 of the present invention.

The foregoing described embodiments may be suitably combined. In addition, references to primary/-transmission side and secondary/reception side may be suitably reversed.

In addition to the foregoing written explanations, it is explicitly referred to figures 1 to 6, wherein the figures in detail show configuration examples of the invention.

## List of Reference Numerals

| | |
|---|---|
| 1 | wireless power system |
| 2 | control unit |
| 10 | primary unit |
| 11 | primary pad |
| 12 | primary wireless communication unit |
| 13 | main communication antenna |
| 15 | air gap |
| 20 | secondary unit |
| 21 | secondary pad |
| 22 | secondary wireless communication unit |
| 23 | main communication antenna |
| 24 | auxiliary sensing antenna |
| 33 | first distance |
| 34 | second distance |
| 35 | third distance |
| 36 | fourth distance |
| 37 | center point |
| 100 | power transmission system |
| 101 | electric vehicle |
| 102 | battery unit |
| 200 | machine learning model (trained) |
| 201 | input parameter |
| 202 | neuron-parameter |
| 203 | output unit |
| 204 | first neural network |
| 205 | second neural network |
| 206 | third neural network |

## Claims

1. Wireless power system (1), comprising:

   • a first unit (10, 20) including a pad (11, 21) and a wireless communication unit (12, 22), wherein the pad (11, 21) is configured to wirelessly transmit or receive power to or from a second unit (10, 20), and the wireless communication unit (12, 22) is configured to receive a communication signal from the second unit (10, 20); and
   • a control unit (2), wherein the control unit (2) comprises:

      • an input unit configured to receive the communication signal from the wireless communication unit;
      • a detection unit configured to detect at least one signal strength value and/or at least one phase value of the communication signal;
      • at least one trained machine learning model (200, 204 - 206) programmed to determine a relative position between the first unit (10, 20) and the second unit (10, 20) based at least on the detected signal strength value and/or phase value as input parameters (201); and
      • an output unit configured to output the determined relative position.

2. Wireless power system (1) according to claim 1, wherein the detection unit is configured to detect, as the phase value input parameter (201) for the trained machine learning model (200, 204- 206), a phase-difference between multiple receptions of the communication signal.

3. Wireless power system (1) according to any one of the foregoing claims, wherein the detection unit is configured to detect, as the signal strength value input parameter (201) for the trained machine learning model (200, 204- 206), an amplitude of the received communication signal.

4. Wireless power system (1) according to claims 2 or 3, wherein the wireless communication unit (12, 22) comprises at least one main communication antenna (13, 23) for transmitting and receiving the communication signal, and at least one, especially two to four, auxiliary sensing antennas (24) for detecting the relative position, and wherein the detection unit is especially configured to detect a signal strength difference and/or phase-difference between multiple receptions of the communication signal via the at least one main communication antenna (13, 23) and the at least one auxiliary sensing antenna (24) as input parameters (201).

5. Wireless power system (1) according to any one of the foregoing claims, wherein the control unit (2) comprises at least two trained machine learning models (200, 204 - 206), wherein a first trained machine learning model (204) is programmed to determine the relative position based on the signal strength value as an input parameter (201), and a second trained machine learning model (205) is programmed to determine the relative position based on the phase value as an input parameter (201).

6. Wireless power system (1) according to claim 5, wherein the control unit (2) comprises a further third trained machine learning model (206) programmed to classify, based on the signal strength value and the phase value as input parameters (201), the output relative position as output (203) from the first or the second trained machine learning model (204, 205).

7. Wireless power system (1) according to claim 6, wherein the third trained machine learning model (206) is programmed to estimate the relative position and output from the first or the second trained machine learning model (204, 205) based on the estimated relative position.

8. Wireless power system (1) according to claim 7, wherein the third trained machine learning model (206) is programmed to output from the first trained machine learning model (204) when the estimated relative position is above a predetermined distance threshold and to output from the second trained machine learning model (205) when the estimated relative position is below the predetermined distance threshold.

9. Wireless power system (1) according to any one of the foregoing claims, wherein the at least one trained machine learning model (200, 204 - 206) is pre-trained with predetermined relative positions, detected signal strength values, and detected phase values.

10. Wireless power system (1) according to claim 9, wherein the predetermined relative positions are based on two- or three-dimensional Cartesian coordinates representing a distance between the first unit (20) and the second unit (10).

11. Wireless power system (1) according to any one of the foregoing claims, wherein the at least one trained machine learning model (200, 204 - 206) is respectively a trained neural network, especially a trained feedforward neural network.

12. Wireless power system (1) according to claim 11, wherein each of the at least one trained neural networks (200, 204 - 206) comprises a set of neuron-parameters (202).

13. Power transmission system (100), comprising the wireless power system (1) according to any one of the foregoing claims and the second unit (10).

14. Method for training a machine learning model, especially for training the machine learning model (200, 204 - 206) of the foregoing claims, for determining a relative position between a first unit (20) of a wireless power system (1) and a second unit (10), the first unit (20) and the second unit (10) comprising a first wireless communication unit (22) and a second wireless communication unit (12), respectively, the method comprising:

  • placing (S1) the first unit (20) and/or the second unit (10) on a positioning jig;
  • a first iteration of:

    • recording (S2) a first relative position of the first unit (20) and/or the second unit (10);
    • transmitting (S3) a communication signal between the first unit (20) and the second unit (10);
    • detecting (S4) at least one first phase value and/or at least one first signal strength value of the communication signal received by the first unit (20) or the second unit (10) at the first relative position; and at least a second iteration of:
    • changing (S1'), via the positioning jig, the relative position to a second relative position and repeating said recording (S2), transmission (S3), and detecting (S4) steps, and
    • inputting (S5) of the recorded relative position(s) and the detected phase value(s) and/or the detected signal strength value(s) as a set of training data points for input parameters (201) of the machine learning model (200, 204 - 206).

15. Wireless power system according to any one of claims 1 to 12, wherein the trained machine learning model (200, 204 - 206) is trained by the method of claim 14.

# Fig. 1

# Fig. 2

# Fig. 3

# Fig. 4

**Fig. 5**

EP 4 738 652 A1

# Fig. 6

Europäisches
Patentamt

European
Patent Office

Office européen
des brevets

# EUROPEAN SEARCH REPORT

**Application Number**

EP 24 20 9561

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2018/359003 A1 (LEE KYUNG-WOO [KR] ET AL) 13 December 2018 (2018-12-13) | 1,2, 11-13 | INV. H02J50/90 |
| A | * paragraphs [0001] - [0006], [0010], [0011], [0023], [0024], [0029], [0040], [0041], [0073] - [0075] * | 3-10,14 | G06N3/02 |
| | ----- | | |
| A | US 2022/281337 A1 (MEESSEN KOEN JOSEPH [NL]) 8 September 2022 (2022-09-08) * paragraphs [0001], [0002], [0007], [0009], [0012], [0014] - [0018], [0027], [0036], [0042], [0079] * | 1-15 | |
| | ----- | | |
| A | WO 2024/209898 A1 (SOFTBANK CORP [JP]) 10 October 2024 (2024-10-10) * figures 1-7 * | 1-15 | |
| | ----- | | |
| Y | US 2020/336023 A1 (ZEINE AYMAN HATEM [US] ET AL) 22 October 2020 (2020-10-22) * paragraphs [0001] - [0004], [0006], [0025], [0026], [0028], [0029], [0033] - [0039], [0062], [0067]; figures 1,5B * | 1,2, 11-13 | |
| | ----- | | **TECHNICAL FIELDS SEARCHED (IPC)** |
| Y | US 2018/089566 A1 (LI ANJIAN [CN] ET AL) 29 March 2018 (2018-03-29) * paragraphs [0006] - [0008] * | 1,2, 11-13 | H02J G06N |
| | ----- | | |
| Y | MIRDITA PAUL ET AL: "Localization for Intelligent Systems Using Unsupervised Learning and Prediction Approaches", IEEE CANADIAN JOURNAL OF ELECTRICAL AND COMPUTER ENGINEERING, IEEE, vol. 44, no. 4, 12 May 2021 (2021-05-12), pages 443-455, XP011893980, DOI: 10.1109/ICJECE.2021.3062971 [retrieved on 2021-12-14] * Abstract, I. Introduction * | 1,2, 11-13 | |
| | ----- | | |
| | -/-- | | |

The present search report has been drawn up for all claims

| Place of search | Date of completion of the search | Examiner |
|---|---|---|
| Munich | 2 May 2025 | Hanisch, Thomas |

EPO FORM 1503 03.82 (P04C01)

| | Europäisches Patentamt European Patent Office Office européen des brevets | **EUROPEAN SEARCH REPORT** | **Application Number** EP 24 20 9561 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2020/013989 A1 (MOMENTUM DYNAMICS CORP [US]) 16 January 2020 (2020-01-16) * figures 1a-c,2a * ----- | 1-15 | |
| A | US 2018/234797 A1 (LEDVINA BRENT M [US] ET AL) 16 August 2018 (2018-08-16) * paragraphs [0002], [0005], [0006], [0037], [0042] * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 2 May 2025 | Hanisch, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 9561

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2025

| Patent document cited in search report | Publication date | Patent family member(s) | Publication date |
|---|---|---|---|
| US 2018359003 A1 | 13-12-2018 | EP 3444925 A1 | 20-02-2019 |
| | | US 2017288738 A1 | 05-10-2017 |
| | | US 2018359003 A1 | 13-12-2018 |
| | | US 2020052739 A1 | 13-02-2020 |
| | | WO 2017171440 A1 | 05-10-2017 |
| US 2022281337 A1 | 08-09-2022 | CN 113784866 A | 10-12-2021 |
| | | EP 3962771 A1 | 09-03-2022 |
| | | US 2022281337 A1 | 08-09-2022 |
| | | WO 2020225226 A1 | 12-11-2020 |
| WO 2024209898 A1 | 10-10-2024 | JP 7572493 B1 | 23-10-2024 |
| | | JP 2024154436 A | 31-10-2024 |
| | | WO 2024209898 A1 | 10-10-2024 |
| US 2020336023 A1 | 22-10-2020 | US 2020336023 A1 | 22-10-2020 |
| | | US 2023350044 A1 | 02-11-2023 |
| US 2018089566 A1 | 29-03-2018 | CN 107113764 A | 29-08-2017 |
| | | EP 3282781 A1 | 14-02-2018 |
| | | JP 6596516 B2 | 23-10-2019 |
| | | JP 2018521311 A | 02-08-2018 |
| | | US 2018089566 A1 | 29-03-2018 |
| | | WO 2016187746 A1 | 01-12-2016 |
| WO 2020013989 A1 | 16-01-2020 | CA 3105049 A1 | 16-01-2020 |
| | | CN 112425031 A | 26-02-2021 |
| | | EP 3821519 A1 | 19-05-2021 |
| | | ES 2955420 T3 | 30-11-2023 |
| | | JP 7281832 B2 | 26-05-2023 |
| | | JP 2021530950 A | 11-11-2021 |
| | | KR 20210029797 A | 16-03-2021 |
| | | PT 3821519 T | 05-09-2023 |
| | | WO 2020013989 A1 | 16-01-2020 |
| US 2018234797 A1 | 16-08-2018 | CN 110312644 A | 08-10-2019 |
| | | CN 114889553 A | 12-08-2022 |
| | | DE 112018000346 T5 | 19-09-2019 |
| | | JP 6975245 B2 | 01-12-2021 |
| | | JP 2020510567 A | 09-04-2020 |
| | | KR 20190105049 A | 11-09-2019 |
| | | US 2018234797 A1 | 16-08-2018 |
| | | US 2019297457 A1 | 26-09-2019 |
| | | US 2022191644 A1 | 16-06-2022 |
| | | US 2023239656 A1 | 27-07-2023 |
| | | US 2025106587 A1 | 27-03-2025 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 20 9561

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2025

| Patent document cited in search report | Publication date | Patent family member(s) | Publication date |
|---|---|---|---|
| | | WO 2018148687 A1 | 16-08-2018 |

For more details about this annex : see Official Journal of the European Patent Office, No. 12/82

page 2 of 2

**EP 4 738 652 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20200353832 A1
- US 20190381891 A1
- US 20230131879 A1
- US 20200339000 A1